## Europäisches Patentamt
## European Patent Office
## Office européen des brevets

(11) Numéro de publication: **0 209 510**
**B1**

(12) **FASCICULE DE BREVET EUROPEEN**

(45) Date de publication du fascicule du brevet:
29.08.90

(51) Int. Cl.⁵: **A23K 1/18**, A23K 1/00, A23K 1/16

(21) Numéro de dépôt: **86870089.9**

(22) Date de dépôt: **19.06.86**

(54) Procédé de préparation de nouvelles levures comme composés d'alimentation pour alevins.

(30) Priorité: **20.06.85 LU 85967**

(43) Date de publication de la demande:
**21.01.87 Bulletin 87/4**

(45) Mention de la délivrance du brevet:
**29.08.90 Bulletin 90/35**

(84) Etats contractants désignés:
**AT BE CH DE FR GB IT LI LU NL SE**

(56) Documents cités:
**DE-A- 2 711 485**
**FR-A- 1 242 371**
**FR-A- 2 008 730**
**FR-A- 2 037 719**
**FR-A- 2 322 154**
**FR-A- 2 447 684**

**PATENT ABSTRACTS OF JAPAN,
vol. 3, no. 123 (C-61), 16 octobre 1979; &
JP-A-54 105 081 (KYOWA HAKKO KOGYO
K.K.) 17-08-1979
BULLETIN OF THE JAPANESE SOCIETY OF SCIENTIFIC
FISHERIES, vol. 45, no. 8, 1979, pages 955-959; O.
IMADA et al.: "Development of a new yeast as a culture
medium for living feeds used in the production of fish
seed"**

(73) Titulaire: **SYNFINA - OLEOFINA S.A., Parc Industriel
Zone D, B-6538 Manage(BE)**

(72) Inventeur: **Prieels, Jean-Paul, Avenue de Février 7,
B-1200 Bruxelles(BE)**
Inventeur: **Tirtiaux, Léa, Rue des Combattants 162,
B-1301 Bierges(BE)**

(74) Mandataire: **Detrait, Jean-Claude, c/o Fina Research
S.A. Dépt. Brevets Zone Industrielle C, B-6520 Feluy(BE)**

# EP 0 209 510 B1

## Description

La présente invention se rapporte à la préparation de nouvelles levures, utilisées comme composés d'alimentation pour alevins et autres mollusques ou crustacés. En particulier, la presente invention concerne un procédé de préparation de nouvelles levures destinées à substituer les algues du type "chlorella marine" utilisées pour l'alimentation des alevins.

Le document FR-A-2322154 enseigne la préparation de succédanés de lait consistant en une émulsion de lipide dans de l'eau contenant séparément des protéines unicellulaires et une solution ou dispersion stable d'un hydrate de carbone ou d'une matière protéinique.

Le document FR-A-2447684 enseigne un procédé de préparation de nourriture pour très petits animaux aquatiques par pulvérisation d'une solution aqueuse d'un polymère sur une farine. L'aliment peut contenir de l'huile libre, préalablement pulvérisée sur la farine.

Le résumé du document JP-A-54105081 décrit l'utilisation d'acides omega-3 insaturés ou de leurs esters, en combinaison avec des levures, pour l'alimentation de micro-organismes marins.

Il est bien connu que l'élevage de crustacés, mollusques et autres alevins nécessite l'utilisation d'algues du type chlorella marine, à haute valeur nutritive et caractérisée par une teneur élevée en acides gras polyinsaturés. Les acides gras sont des acides essentiels, qui ne sont pas synthétisés par les animaux eux-mêmes, il faut donc les leur donner sous une forme assimilable.

Afin de remplacer le mieux possible les algues du type chlorella marine, on a déjà pensé à incorporer dans certaines compositions des huiles de poissons et principalement l'huile de foie de morue qui est particulièrement riche en acides gras polyinsaturés.

On a déjà proposé d'améliorer de la levure de boulangerie avec de l'huile de poisson, dans le but d'accroître la valeur diététique du rotifère qui s'en nourrit; cependant, on enseigne clairement que la levure doit absolument rester vivante, et qu'en aucun cas elle ne peut être séchée.

Sur base de ces enseignements, il est évident que l'on élimine grandement les possibilités d'application d'un tel produit, puisqu'il doit le plus souvent être fraîchement préparé et rester en solution afin de conserver toutes ses propriétés. De plus, on sait que de tels produits présentent de l'oxydation et l'on constate même l'apparition de moisissure après seulement huit jours de conservation, ce qui ne peut convenir pour des stockages de longue durée. Il serait dès lors avantageux de pouvoir disposer d'une levure séchée qui aurait les mêmes propriétés biologiques que les algues de type chlorella marine, mais qui pourrait être stockée sans oxydation de l'huile, ni sans que l'on constate l'apparition de moisissures.

La présente invention a pour objet un procédé qui permette de préparer de nouvelles levures contenant de l'huile riche en acides gras polyinsaturés, qui peuvent être stockées sans inconvénient.

La présente invention a également pour objet un procédé de préparation de nouvelles levures, renfermant de l'huile riche en acides gras polyinsaturés, qui peuvent être séchées et conservées de très longues périodes de temps sans présenter d'inconvénient.

Le procédé de la présente invention pour préparer de nouvelles levures comme composés d'alimentation pour alevins est caractérisé en ce qu'il comprend les étapes qui consistent à :
- prendre une quantité adéquate de levure Saccharomyces Cerevisiae;
- émietter la levure;
- ajouter à la levure une quantité adéquate d'eau désionisée;
- ajouter à ce mélange une quantité adéquate d'huile de poisson;
- homogénéiser le mélange par agitation pour en former une émulsion stable;
- transporter l'émulsion ainsi formée dans un appareillage pour le sécher;
- récupérer la levure séchée chargée d'huile de poisson.

On conditionne ensuite la levure séchée et récupérée au pied de l'atomiseur à l'abri de l'air, le plus souvent sous azote ou $CO_2$.

Selon le procédé de l'invention, on utilise une levure type Saccharomyces Cerevisiae, ou plus communément de la levure de boulangerie. Cette levure se présente sous forme de blocs pressés dont la teneur en levure sèche est le plus souvent comprise entre 20 et 35 % en poids.

On introduit cette levure dans un récipient et on émiette la levure de manière à réduire la taille des morceaux de levure pour permettre une meilleure incorporation des autres ingrédients.

On ajoute ensuite à cette levure émiettée une quantité adéquate d'eau, de manière à former une bouillie qui soit aisément transportable.

Bien qu'il soit préférable d'utiliser de l'eau désionisée, on peut cependant utiliser de l'eau de ville avec pour conséquence un accroissement de la teneur en sel du produit sec. Ce fait n'est pas tellement favorable car cela diminue la teneur en produit actif et surtout il y a un risque de redissolution des sels dans l'alimentation des alevins.

La quantité d'eau à mettre en oeuvre est telle que la teneur en matière sèche totale soit comprise entre 5 et 20 % en poids. En général, on ajoute un poids d'eau pratiquement égal au poids de levure utilisée.

Pour déterminer la quantité adéquate d'eau à ajouter, il faut bien entendu tenir compte de la viscosité de la bouillie, puisqu'elle doit être aisément pompée et envoyée dans un dispositif de séchage; de plus, la quantité d'eau ne doit par être trop importante non plus d'un point de vue économique.

On ajoute ensuite de l'huile de poisson, ou un mélange de plusieurs huiles contenant au moins une huile de poisson. L'huile de poisson que l'on utilise dans le procédé de l'invention est le plus souvent de l'huile

2

de foie de morue, dont la composition en acides gras polyinsaturés est avantageuse pour l'alimentation des alevins, puisqu'elle se rapproche de celle donnée par les algues de type chlorella marine; cependant, on peut également utiliser de l'huile de foie de seiche seule ou en mélange avec l'huile de foie de morue.

On peut également utiliser d'autres huiles que l'huile de foie de morue, pour autant que leur apport en acides gras polyinsaturés soit avantageux. On peut également ajouter des matières grasses comme tel ou des vitamines ou autres substances liposolubles. A cet effet, on peut notamment citer l'huile de paprika.

Généralement, la quantité d'huile ajoutée est telle que la quantité de matière grasse dans le mélange levure et eau ne dépasse pas 20 % en poids de la matière sèche. Lorsque l'on utilise dans quantités plus importantes de matière grasse, on observe un relargage de l'huile après séchage du produit, ce qui est désavantageux puisqu'à ce moment, l'huile relarguée n'est plus disponible pour alimenter les alevins ou autres rotifères.

On homogénise ensuite le mélange constitué par la levure, l'eau et l'huile, par agitation vigoureuse pour former une émulsion stable, sans agent émulsifiant.

L'émulsion peut évidemment contenir des agents de conservation comme les antioxydants.

Cette émulsion est pompée dans un appareil de séchage par atomisation. Généralement, la température à l'entrée de l'atomiseur est comprise entre 170 et 205°C, tandis qu'à la sortie la température est d'au moins 65°C, mais elle peut atteindre 95°C également. Le choix des conditions de température lors du séchage dépend également du débit désiré dans le sécheur. Ainsi, si la température est faible, le débit diminue, par contre si la température est trop élevée, il y a destruction partielle des acides gras polyinsaturés.

Selon le procédé de l'invention, il est préférable d'opérer à une température de sortie comprise entre 75 et 85°C.

On récupère ensuite les particules de levure séchée et imprégnée d'huile, au pied de l'atomiseur, et ces particules sont stockées pour usage ultérieur, à l'abri de l'air, en général sous atmosphère inerte. On ne constate aucun inconvénient du type oxydation ou apparition de moisissures.

Les examples suivants sont donnés afin de mieux illustrer le procédé de l'invention, mais sans pour autant en limiter la portée. Dans les tableaux, la composition est donnée en % en poids.

Exemple 1

On a introduit dans une cuve, 2000 kg de levure de boulangerie, que l'on a émiettée en fines particules. Cette levure contenait au départ 27% en poids de matière sèche.

On a ensuite mélangé à cette levure
- 2000 kg d'eau désionisée
- 92 kg d'huile de foie de morue dont composition au Tableau I
- 2,85 kg d'huile de paprika

On a agité ce mélange au moyen d'un agitateur, de manière à former une émulsion stable; on a ensuite pompé ces 4094,85 kg d'émulsion à l'entrée de l'atomiseur, avec un débit de 500 kg/heure. La température à l'entrée de l'atomiseur était de 180°C.

La température à la sortie était de 80°C. On a récupéré 635 kg de levure sèche et imprégnée, et on l'a stockée sous vide pendant 6 mois.

Après cette période, on a analysé le produit, et on a constaté qu'il avait une composition en acides gras polyinsaturés, similaire à celle de l'huile de foie de morue. De plus, il n'y avait aucune trace d'infection bactérienne ou d'oxydation de ces acides gras insaturés.

### TABLEAU I

#### Composition de l'huile de foie de morue

| | |
|---|---|
| C14:0 | 2,98 |
| C16:0 | 9,22 |
| C16:1 | 9,01 |
| C18:0 | 2,09 |
| C18:1 | 17,50 |
| C18:2 | 4,87 |
| C18:3 + conj. | 1,20 |
| C20:0 | 1,89 |
| C20:1 | 13,00 |
| C20:5 | 9,17 |
| C22:1 | 9,45 |
| C22:6 | 10,46 |

(Le chiffre après les : indique le nombre de doubles liaisons)

Exemple 2

On a introduit dans une cuve, 1575 kg de levure de boulangerie que l'on a émiettée en fines particules. Cette levure contenait au départ 27 % en poids de matière sèche.

On a ensuite mélangé à cette levure
- 1575 kd d'eau
- 73 kg d'huile de foie de morue, dont composition au Tableau II
- 7,5 g de BHT comme antioxydant.

On a agité ce mélange au moyen d'un agitateur, de manière à former une émulsion stable; on a ensuite pompé ces 3223 kg d'émulsion à l'entrée de l'atomiseur, avec un débit de 500 kg/heure. La température à l'entrée de l'atomiseur était de 200°C.

La température à la sortie était de 85°C. On a récupéré 498 kg de levure sèche et imprégnée, et on l'a stockée sous vide pendant 6 mois.

Après cette période, on a analysé le produit, et on a constaté qu'il avait une composition en acides gras polyinsaturés similaire à celle de l'huile de foie de morue. De plus, il n'y avait aucune trace d'infection bactérienne ou d'oxydation de ces acides gras insaturés.

TABLEAU II

Composition de l'huile de foie de morue

| | |
|---|---|
| C14:0 | 3,24 |
| C16:0 | 10,78 |
| C16:1 | 8,92 |
| C18:0 | 2,49 |
| C18:1 | 23,90 |
| C18:2 | 1,97 |
| C18:3 + conj. | - |
| C20:0 | 2,29 |
| C20:1 | 11,34 |
| C20:5 | 9,01 |
| C22:1 | 5,62 |
| C22:6 | 10,43 |

(le chiffre après les : indique le nombre de doubles liaisons)

A titre de comparaison, on a utilisé une levure de boulangerie et on l'a cultivée 24 heures en l'absence d'huile et 24 heures en présence de l'huile de foie de morue.

On a examiné la levure ainsi préparée.

Après 2 semaines de conservation à 4°C, on a observé l'apparition de moisissures, ainsi que l'oxydation de l'huile.

Exemple 3

On a introduit dans une cuve, 800 kg d'eau déminéralisée et on a incorporé 800 kg de levure émiettée. Cette levure contenait au départ 30 % en poids de matière sèche.

On a ensuite ajouté au mélange
- 41,4 kg d'huile de foie de morue, dont composition au tableau III
- 1,28 kg d'oléorésine de paprika
- 171 g d'alpha-tocophérol acétate ⎫
 ⎬ comme antioxydants
- 43 g d'ascorbyl palmitate ⎭

On a agité ce mélange sous atmosphère inerte (N₂) au moyen d'un mixer, de manière à former une émulsion stable. On a ensuite pompé ces 1643 kg d'émulsion à l'entrée de l'atomiseur, avec un débit de 350 kg/heure. La température à l'entrée de l'atomiseur était de 165°C. La température de sortie était de 80°C.

On a récupéré 248 kg de levure sèche et imprégnée, et on l'a emballée sous atmosphère inerte (80% N₂ + 20% CO₂).

Après une période de 6 mois, on a analysé le produit, et on a constaté qu'il avait une composition en acides gras polyinsaturés similaire à celle de l'huile de foie de morue. De plus, il n'y avait aucune trace d'infection microbienne ou d'oxydation de ces acides gras insaturés.

## TABLEAU III

### Composition de l'huile de foie de morue

| | |
|---|---|
| C14:0 | 7,67 |
| C16:0 | 14,75 |
| C16:1 | 10,74 |
| C17:0 | 2,95 |
| C18:0 + C18:1 | 18,65 |
| C18:2 | 5,01 |
| C18:3 + conj. | 2,31 |
| C20:0 | 5,76 |
| C20:1 | 8,85 |
| C20:5 | 10,90 |
| C22:1 | 3,29 |
| C22:6 | 4,17 |

(Le chiffre après les : indique le nombre de doubles liaisons)

**Revendications**

1. Procédé pour préparer de nouvelles levures comme composés d'alimentation pour alevins, caractérisé en ce qu'il comprend les étapes qui consistent à:
- prendre une quantité adéquate de levure Saccharomyces cerevisiae;
- émietter la levure;
- ajouter à la levure une quantité d'eau désionisée telle que la teneur en matière sèche par rapport au poids total soit comprise entre 5 et 20% en poids;
- ajouter à ce mélange une quantité d'huile de poisson telle que la teneur en matière grasse dans le mélange ne dépasse pas 20% en poids de la matière sèche;
- homogénéiser le mélange par agitation pour en former une émulsion stable;
- transporter l'émulsion ainsi formée dans un appareillage pour la sécher;
- récupérer la levure séchée chargée d'huile de poisson.

2. Procédé selon la reveodication 1, caractérisé en ce que l'on utilise une levure pressée dont la teneur en matière sèche est comprise entre 20 et 35% en poids.

3. Procédé selon la revendication 2, caractérisé en ce que l'on ajoute à la levure une quantité d'eau approximativement égale au poids de levure utilisée.

4. Procédé selon l'une quelconque des revendications 1 à 3, caractérisé en ce que l'on ajoute au mélange constitué de levure et d'eau une huile de poisson choisie notamment parmi l'huile de foie de morue ou l'huile de foie de seiche.

5. Procédé selon l'une quelconque des revendications 1 à 4, caractérisé en ce que l'on ajoute en plus de la matière grasse ou des vitamines ou autres substances liposolubles.

6. Procédé selon l'une quelconque des revendications 1 à 5, caractérisé en ce que l'on pompe l'émulsion stable constituée de levure, d'eau et d'huile dans un appareil de séchage par atomisation.

7. Procédé selon la revendication 6, caractérisé en ce que l'on introduit l'émulsion dans l'atomiseur à une température comprise entre 170 et 205°C.

8. Procédé selon l'une quelconque des revendications 6 ou 7, caractérisé en ce que l'on réalise le séchage de l'émulsion de sorte que la température à la sortie de l'atomiseur soit comprise entre 65 et 95°C.

9. Procédé selon l'une quelconque des revendications 6 à 8, caractérisé en ce que l'on conditionne ensuite la levure récupérée au pied de l'atomiseur, sous atmosphère inerte, de préférence sous azote ou $CO_2$.

**Claims**

1. A process for the preparation of new yeasts as food compounds for fries comprising the steps of:
- providing an adequate quantity of the yeast Saccharomyces cerevisiae;
- crumbling the yeast;

- adding an adequate quantity of deionized water to the yeast so that the total dry matter content is from 5 to 20% by weight;
- adding an adequate quantity of fish oil to this mixture so that the fatty substances content in the mixture does not exceed 20% by weight of the dry matter;
- homogenizing the mixture by stirring to make a stable emulsion thereof;
- transferring the emulsion thus formed to an apparatus for drying; and
- collecting the dried yeast loaded with fish oil.

2. A process according to Claim 1, wherein a compressed yeast, the dry matter content of which is from 20 to 35% by weight, is used.

3. A process according to Claim 2, wherein the amount of water which is added is approximately equal to the weight of the yeast.

4. A process according to any one of the preceding Claims, wherein a fish oil, preferably selected from cod-liver oil or cuttlefish-liver oil, is added to the mixture of yeast and water.

5. A process according to any one of the preceding Claims, wherein in addition, fat, vitamins or other fat-soluble substances are added.

6. A process according to any one of the preceding Claims, wherein a stable emulsion consisting of yeast, water and oil is pumped to a spray drying device.

7. A process according to Claim 6, wherein the emulsion is introduced into an atomizer at a temperature of from 170 to 205°C.

8. A process according to any one of Claims 6 or 7 wherein the drying of the emulsion is carried out in such a way that the temperature at the atomizer outlet is from 65 to 95°C.

9. A process according to any one of Claims 6 to 8, wherein the yeast product, collected from the bottom of the atomizer, is then packaged in an inert atmosphere, preferably under nitrogen or $CO_2$.

**Patentansprüche**

1. Verfahren zur Herstellung von neuen Hefen als Futtermittel für Fischbruten, dadurch gekennzeichnet, daß es folgende Schritte umfaßt:
- Nehmen einer ausreichenden Menge der Hefe <u>Saccharomyces</u> <u>cerevisiae</u>;
- Zerbröckeln der Hefe;
- Hinzufügen einer ausreichenden Menge von entionisiertem Wasser zu der Hefe, so daß der Gehalt an Trockensubstanz in bezug auf das Gesamtgewicht zwischen 5 und 20 Gew.% liegt:
- Hinzufügen einer, Menge an Fischöl zu dieser Mischung, so daß der Gehalt an Fett in der Mischung 20 Gew.% der Trockensubstanz nicht übersteigt;
- Homogenisieren der Mischung durch Rühren, um aus ihr eine stabile Emulsion zu bilden;
- Transportieren der so gebildeten Emulsion in eine Apparatur zum Trocknen derselben;
- Entnehmen der getrockneten Hefe, die mit Fischöl versetzt ist.

2. Verfahren nach Anspruch 1, dadurch gekennzeichnet, daß eine Preßhefe benutzt wird, deren Gehalt an Trockensubstanz zwischen 20 und 35 Gew.% liegt.

3. Verfahren nach Anspruch 2, dadurch gekennzeichnet, daß der Hefe eine Menge an Wasser zugesetzt wird, die ungefähr gleich dem Gewicht der benutzten Hefe ist.

4. Verfahren nach einem der Ansprüche 1 bis 3, dadurch gekennzeichnet, daß zu der aus Hefe und Wasser bestehenden Mischung ein Fischmehl hinzugefügt wird, das insbesondere unter Dorschleberöl oder Tintenfischleberöl ausgewählt wird.

5. Verfahren nach einem der Ansprüche 1 bis 4, dadurch gekennzeichnet, daß zusätzlich Fett oder Vitamine oder andere fettlösliche Substanzen zugesetzt werden.

6. Verfahren nach einem der Ansprüche 1 bis 5, dadurch gekennzeichnet, daß die stabile Emulsion, die aus Hefe, Wasser und Öl besteht, in einen Zerstäubungstrockenapparat gepumpt wird.

7. Verfahren nach Anspruch 6, dadurch gekennzeichnet, daß die Emulsion in den Zerstäuber mit einer Temperatur zwischen 170 und 205°C eingebracht wird.

8. Verfahren nach Anspruch 6 oder 7, dadurch gekennzeichnet, daß das Trocknen der Emulsion so erfolgt, daß die Temperatur am Ausgang des Zerstäubers zwischen 65 und 95°C liegt.

9. Verfahren nach einem der Ansprüche 6 bis 8, dadurch gekennzeichnet, daß danach die am Fuß des Zerstäubers entnommene Hefe unter inerter Atmosphäre, vorzugsweise unter Stickstoff oder $CO_2$, behandelt wird.